# FASCICULE DE BREVET EUROPEEN

(11) **EP 2 162 358 B1**
(45) Date de publication et mention de la délivrance du brevet: **01.12.2010**
(21) Numéro de dépôt: 08760329.6
(22) Date de dépôt: 02.06.2008
(51) Int. Cl.: B64D 27/26

(54) **DISPOSITIF D'ACCROCHAGE D'UN TURBOPROPULSEUR D'AERONEF COMPRENANT DES MOYENS DE FIXATION HYDRAULIQUES**
BEFESTIGUNGSVORRICHTUNG FÜR FLUGZEUGTURBOMOTOR MIT HYDRAULISCHEN FIXIERMITTELN
AIRCRAFT TURBOPROP ATTACHMENT DEVICE COMPRISING HYDRAULIC FASTENING MEANS

(30) Priorité: 04.06.2007 FR 0755449
(43) Date de publication de la demande: 17.03.2010
(73) Titulaire: AIRBUS OPERATIONS, 31060 Toulouse (FR)
(72) Inventeur: MARCHE, Hervé, F-31200 Toulouse (FR)
(74) Mandataire: Ilgart, Jean-Christophe
(86) Numéro de dépôt international: PCT/EP2008/056742
(87) Numéro de publication internationale: WO 2008/148722

(56) Documents cités:
- EP-A- 0 855 536
- GB-A- 2 266 080
- GB-A- 2 407 134

## Description

### DOMAINE TECHNIQUE

La présente invention se rapporte de façon générale à un dispositif apte à assurer l'accrochage d'un turbopropulseur sous une voilure d'aéronef, ou encore au-dessus de cette même voilure.

Un tel dispositif peut être utilisé sur tout type d'aéronef comportant des turbopropulseurs suspendus ou montés au-dessus de sa voilure, tels que des turbopropulseurs susceptibles de fournir une puissance fortement élevée, pouvant dépasser les 10000 chevaux.

### ETAT DE LA TECHNIQUE ANTERIEURE

Sur les aéronefs existants, les moteurs sont suspendus en dessous ou montés au-dessus de la voilure par des dispositifs d'accrochage complexes, également appelés « EMS » (de l'anglais « Engine Mounting Structure »), pour former conjointement un assemblage dit ensemble moteur.

Ces dispositifs sont notamment conçus pour permettre la transmission à la voilure des efforts statiques et dynamiques engendrés par les moteurs, tels que le poids, la poussée, ou encore les différents efforts dynamiques.

Dans l'art antérieur, pour suspendre un turbopropulseur sous une voilure d'aéronef, il est classiquement proposé un dispositif d'accrochage comportant une structure rigide pourvue d'un caisson sous-aile arrière, ainsi que d'un ou plusieurs tronçons rigides avant disposés successivement vers l'avant selon la direction longitudinale du moteur.

Dans cette configuration, chaque tronçon rigide avant comporte par exemple deux cadres transversaux espacés l'un de l'autre, et reliés entre-eux par l'intermédiaire d'une pluralité de bielles et/ou de poutres/caissons, comme cela est montré sur les documents EP 1 538 080 B1 et US 7 159 819 B1.

De manière connue, le dispositif d'accrochage comprend des moyens de fixation du turbopropulseur sur la structure rigide, ces moyens prenant habituellement la forme d'une pluralité d'attaches dites souples, permettant notamment de filtrer / d'amortir les vibrations engendrées par l'hélice du turbopropulseur, cf. EP 0 855 536. Ces attaches sont généralement réparties sur un cadre avant et sur un cadre arrière, ce dernier pouvant être rapporté sous le caisson sous-aile. Elles sont par exemple réparties au nombre de trois ou quatre sur le cadre avant, et au nombre de deux sur le cadre arrière.

Chacune de ces attaches souples transmet avec une souplesse relative, vers la structure rigide, des efforts dans au moins deux directions privilégiées. En conséquence le montage réalisé est totalement hyperstatique, de sorte que les efforts aux interfaces dépendent de la souplesse relative du moteur, du mât et des attaches, des tolérances de fabrication et des distorsion différentielles thermiques, ce qui rend leur détermination extrêmement complexe. Par ailleurs, la nature hyperstatique de ces moyens de fixation peut engendrer des difficultés de montage, ainsi que l'apparition de contraintes mécanique importantes.

### EXPOSÉ DE L'INVENTION

L'invention a donc pour but de proposer un ensemble moteur pour aéronef remédiant au moins partiellement aux inconvénients mentionnés ci-dessus, relatifs aux réalisations de l'art antérieur.

Pour ce faire, l'invention a pour objet un ensemble moteur pour aéronef comprenant un turbopropulseur ainsi qu'un dispositif d'accrochage dudit turbopropulseur sur une voilure de l'aéronef, ledit dispositif d'accrochage comportant une structure rigide ainsi que des moyens de fixation dudit turbopropulseur sur ladite structure rigide. Selon l'invention, lesdits moyens de fixation comprennent six systèmes hydrauliques indépendants les uns des autres, chacun exclusivement dédié au transfert, vers ladite structure rigide, des efforts s'exerçant respectivement selon l'un des six degrés de liberté de mouvement associés audit turbopropulseur, chaque système hydraulique comprenant au moins un vérin hydraulique présentant un piston rapporté sur l'un des deux éléments parmi le turbopropulseur et la structure rigide du dispositif d'accrochage, ainsi qu'un cylindre logeant ledit piston et rapporté sur l'autre de ces deux mêmes éléments.

Par conséquent, l'invention propose une solution originale permettant d'aboutir à un assemblage isostatique du turbopropulseur sur la structure rigide du dispositif d'accrochage, étant donné que chacun des systèmes hydrauliques est effectivement dédié à la prise en compte de l'un des six degrés de liberté de mouvement associés au turbopropulseur, à savoir les trois degrés de translation et les trois degrés de rotation.

Avec ce caractère isostatique du montage, la détermination des efforts aux interfaces est facilitée, et le montage considérablement simplifié, en étant exempt de contraintes mécaniques.

Il est précisé que ces systèmes hydrauliques indépendants sont de préférence des systèmes fermés, et passifs dans la mesure où ils ne sont aucunement commandés par de quelconques moyens d'actionnement, mais au contraire uniquement réactifs aux mouvements relatifs du turbopropulseur.

De préférence, au moins l'un desdits six systèmes hydrauliques, et encore plus préférentiellement chacun d'eux, comprend au moins deux vérins connectés hydrauliquement et présentant chacun un piston rapporté sur l'un des éléments parmi le turbopropulseur et la structure rigide du dispositif d'accrochage, ainsi qu'un cylindre logeant ledit piston et rapporté sur l'autre de ces mêmes éléments.

Le fait de prévoir plusieurs vérins connectés hydrauliquement offre la possibilité de répartir les efforts d'une manière désirée et prédéterminée sur la structure rigide, par exemple sur deux cadres transversaux de cette structure. En effet, la pression rencontrée au sein des différents vérins d'un même système étant identique en raison de leur connexion hydraulique, la répartition des efforts transmis par chacun des vérins d'un système est donc fonction du diamètre des pistons, étant à cet égard rappelé que si ces efforts varient en fonction de la charge appliquée, leur rapport reste constant.

A titre indicatif, il peut être recherché une répartition dans laquelle la majorité des efforts passent dans un plan transversal avant de la structure rigide, et l'autre partie dans un plan transversal arrière, dans des proportions pouvant par exemple être du type 80/20.

De plus, le fait de prévoir plusieurs vérins connectés hydrauliquement aide fortement à la reprise des efforts s'exerçant selon les degrés de liberté de rotation du turbopropulseur.

De préférence, au moins l'un desdits six systèmes hydrauliques, et encore plus préférentiellement chacun d'eux, comprend un dispositif d'amortissement, ceci pour amortir les vibrations essentiellement causées par l'hélice.

Dans un tel cas, le dispositif d'amortissement comprend alors de préférence un réservoir de fluide au sein duquel est logé un corps susceptible d'être comprimé par la pression du fluide, ce réservoir étant connecté hydrauliquement aux différents vérins du système.

De préférence, ledit corps est réalisé en caoutchouc, ou dans un matériau similaire, susceptible d'être comprimé par le fluide sous pression au sein du réservoir. Le matériau est donc préférentiellement choisi en fonction des niveaux de pression du fluide susceptibles d'être rencontrés dans le système hydraulique.

Toujours de manière préférentielle, ledit corps est dépourvu de liaison mécanique rigide avec ledit réservoir de fluide, et prend par exemple la forme d'une bille insérée dans ledit réservoir de fluide, avant sa fermeture.

Comme évoqué ci-dessus, ladite structure rigide comprend des cadres transversaux, chacun desdits vérins hydrauliques étant raccordé sur l'un desdits cadres transversaux. Dans cette configuration, on peut prévoit que seuls deux cadres transversaux portent lesdits vérins hydrauliques, de manière par exemple à obtenir la répartition des efforts indiquée ci-dessus.

Enfin, l'invention a également pour objet un aéronef comprenant au moins un ensemble moteur tel qu'il vient d'être décrit.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'un ensemble moteur selon un mode de réalisation préféré de la présente invention, montrant un turbopropulseur et la structure rigide d'un dispositif d'accrochage de ce turbopropulseur ;
- les figures 2 à 8 représentent des vues schématiques montrant les moyens de fixation hydrauliques du turbopropulseur sur la structure rigide du dispositif d'accrochage ; et
- la figure 9 représente une vue schématique récapitulant les efforts transmis à la structure rigide par les moyens de fixation hydrauliques montrés sur les figures 2 à 8.

### EXPOSÉ DÉTAILLÉ DE MODES DE RÉALISATION PRÉFÉRÉS

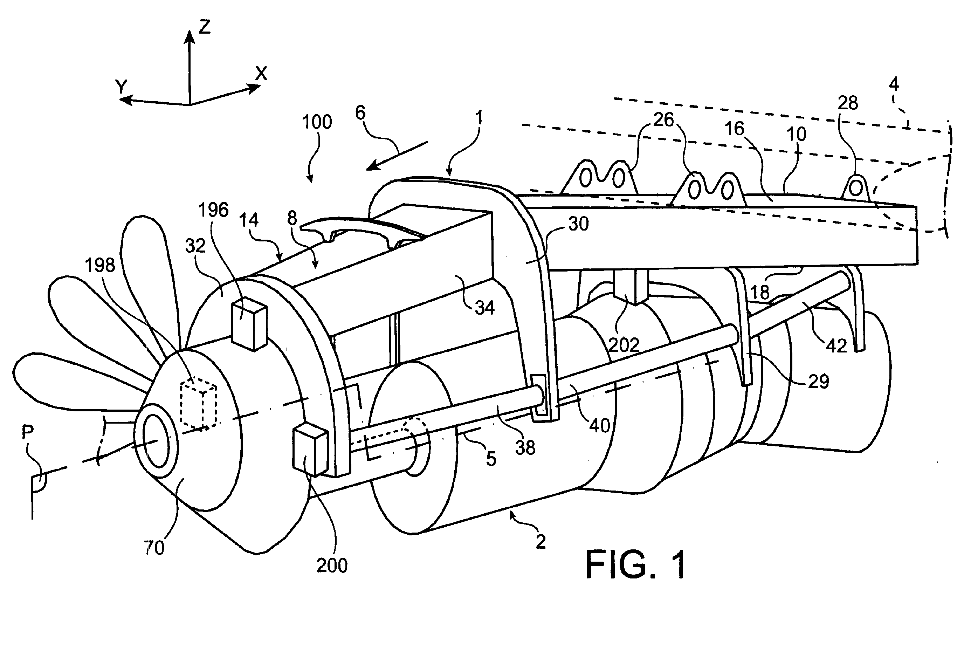

En référence à la figure 1, on voit un ensemble moteur 100 pour aéronef selon un mode de réalisation préféré de la présente invention, cet ensemble 100 comprenant globalement un turbopropulseur 2, ainsi qu'un dispositif ou mât d'accrochage 1. Le dispositif 1 est ici destiné à assurer la suspension du turbopropulseur 2 sous une aile d'aéronef représentée uniquement schématiquement pour des raisons évidentes de clarté, et désignée de façon générale par la référence numérique 4.

Dans toute la description qui va suivre, par convention, on appelle X la direction parallèle à un axe longitudinal 5 du turbopropulseur 2, également assimilable à la direction longitudinale du mât 1 et de l'ensemble 100, Y la direction orientée transversalement par rapport à l'aéronef et au turbopropulseur 2, et également assimilable à la direction transversale du mât 1 et de l'ensemble 100, et Z la direction verticale ou de la hauteur, ces trois directions étant orthogonales entre-elles. Il est précisé que l'axe longitudinal 5 du turbopropulseur 2 est à comprendre comme étant l'axe longitudinal du carter moteur, et non l'axe longitudinal de son hélice propulsive (non référencée).

D'autre part, les termes « avant » et « arrière » sont à considérer par rapport à une direction d'avancement de l'aéronef rencontrée suite à la poussée exercée par les turbopropulseurs 2, cette direction étant représentée schématiquement par la flèche 6.

Sur la figure 1, on peut voir que seule une structure rigide 8 du dispositif d'accrochage 1 a été représentée. Les autres éléments constitutifs non-représentés de ce dispositif 1, du type structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

Dans ce mode de réalisation préféré de la présente invention, la structure rigide 8 comporte de l'arrière vers l'avant, successivement selon l'axe longitudinal 5 du turbopropulseur 2, un caisson sous-aile arrière 10, et un tronçon avant 14.

Le caisson sous-aile arrière 10 est du même type que ceux rencontrés dans les dispositifs d'accrochage de turbopropulseur de l'art antérieur, et bien connus de l'homme du métier.

A titre d'exemple illustratif, ce caisson sous-aile 10 peut comprendre un longeron supérieur 16 ainsi qu'un longeron inférieur 18 s'étendant chacun grossièrement selon la direction X, ces longerons 16 et 18 étant raccordés entre-eux par l'intermédiaire d'une pluralité de nervures intérieures transversales (non visibles) espacées et agencées dans des plans YZ. Néanmoins, comme cela est représenté sur la figure 1, il est possible de prévoir que les longerons 16 et 18 sont situés dans des plans légèrement inclinés par rapport aux plans XY.

En outre, le caisson sous-aile 10 comporte deux flans latéraux assurant la fermeture de celui-ci, chacun de ces deux flans étant éventuellement composé de plusieurs portions de flan planes et verticales.

De plus, comme cela est clairement visible sur la figure 1, le caisson sous-aile arrière 10 présente deux attaches avant 26 destinée à assurer l'accrochage du dispositif 1 sous l'aile 4 de l'aéronef. Par exemple, chaque attache 26 prend la forme d'une ferrure s'étendant vers le haut dans un plan XZ depuis le longeron supérieur 16, au niveau d'une extrémité latérale de celui-ci.

A cet égard, une attache arrière 28 peut également être prévue pour assurer l'accrochage du dispositif 1 sous l'aile 4 conjointement avec les deux attaches avant 26, cette attache 28 prenant alors la forme d'une ferrure s'étendant vers le haut dans un plan YZ depuis le longeron supérieur 16, au niveau d'une extrémité arrière de celui-ci.

En dessous du caisson sous-aile 10, la structure 8 comporte un ou plusieurs cadres transversaux, orientés selon des plans YZ. Dans le mode de réalisation représenté, deux cadres transversaux arrière sont prévus, avec celui situé le plus en avant, référencé 29, étant destiné à porter une partie des moyens de fixation interposés entre le turbopropulseur et la structure rigide.

A l'avant, le caisson sous-aile 10 peut être obturé par un premier cadre transversal avant 30 situé dans un plan YZ, ce cadre 30 étant de préférence en forme générale de U retourné, et faisant également partie intégrante du tronçon avant 14.

Ce tronçon rigide avant 14 comporte effectivement, en association avec le premier cadre transversal 30, un second cadre transversal 32 également situé dans un plan YZ et en forme de U retourné, ses deux branches se dirigeant vers le bas et étant situées en dessous de sa base. Naturellement, cette configuration en forme de U retourné a été adoptée de manière à ce que dans un état monté, le turbopropulseur 2 puisse être agencé entre les deux branches de chaque U.

De plus, ce tronçon rigide 14 dispose d'un caisson avant supérieur 34 reliant une partie supérieure des deux cadres transversaux 30 et 32, et plus spécifiquement les deux bases des U retournés formés respectivement par ces mêmes cadres 30 et 32. Il est noté que dans ce mode de réalisation préféré, un seul caisson 34 relie la partie supérieure des deux cadres transversaux 30 et 32. Néanmoins, sans sortir du cadre de l'invention, il pourrait naturellement être prévu plusieurs caissons avant pour raccorder la partie supérieure de ces deux cadres 30 et 32.

Le caisson avant supérieur 34 présente une conception identique ou similaire à celle du caisson sous-aile 10, comme cela est visible sur la figure 1.

Toujours sur cette figure, on peut apercevoir que les cadres transversaux 30 et 32 sont non seulement reliés par le caisson avant supérieur 34, mais également par l'intermédiaire de bielles 38, le nombre de celles-ci n'étant bien évidemment en aucun cas limitatif. Ces bielles 38 sont agencées symétriquement par rapport au plan vertical passant par l'axe longitudinal 5 du turbopropulseur 2, ce plan P constituant grossièrement un plan de symétrie pour le mât 1 et l'ensemble 100.

Des bielles 40, 42 faisant aussi partie de la structure rigide 8 relient également les cadres 29 et 30, ainsi que les cadres transversaux arrière entre eux.

De la même façon que pour le cadre transversal arrière 29, la cadre transversal avant 32, constituant l'extrémité avant de la structure rigide, est lui aussi destiné à être équipé des moyens de fixation permettant l'accrochage du turbopropulseur sur la structure rigide. De préférence, ces moyens de fixation, particuliers à la présente invention et qui vont maintenant être détaillés en référence aux figures suivantes, sont uniquement raccordés sur ces deux cadres 29, 32, et donc sur aucun autre élément de la structure rigide, ceci dans le but d'introduire les efforts dans la structure, uniquement à travers ces deux plans transversaux avant et arrière.

D'une manière générale, les moyens de fixation employés, propres à la présente invention, sont constitués de six systèmes hydrauliques indépendants les uns des autres, chacun exclusivement dédié au transfert, vers la structure primaire/rigide, des efforts s'exerçant respectivement selon l'un des six degrés de liberté de mouvement associés au turbopropulseur, à savoir les trois degrés de translation ci-après dénommés Tx, Ty et Tz, et les trois degrés de rotation ci-après dénommés Mx, My et Mz, l'indice correspondant toujours à la direction considérée. Aucun autre élément que ces six systèmes hydrauliques indépendants ne participe à l'interface de fixation entre le turbopropulseur et la structure primaire du mât d'accrochage.

De plus, dans le mode de réalisation préféré, chaque système hydraulique comprenant au moins deux vérins connectés hydrauliquement et présentant chacun un piston rapporté sur l'un des éléments parmi le turbopropulseur et la structure rigide du dispositif d'accrochage, ainsi qu'un cylindre logeant à coulissement le piston et rapporté sur l'autre de ces mêmes éléments.

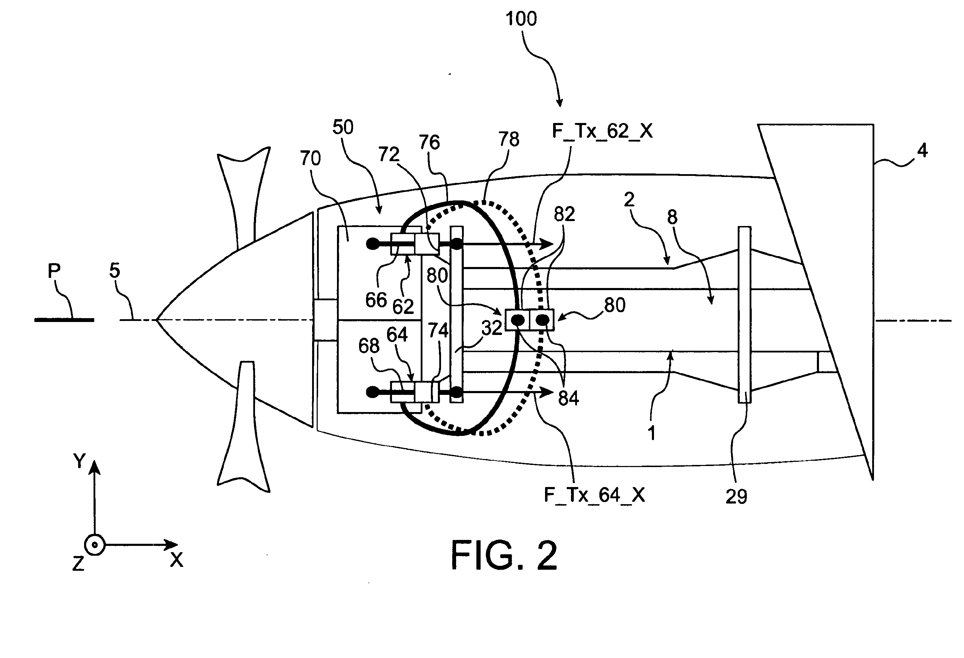

En référence à la figure 2, on peut voir schématiquement le système hydraulique 50 faisant partie intégrante des moyens de fixation précités et dédié au transfert, du turbopropulseur 2 vers la structure rigide 8, des efforts s'exerçant selon la direction X, ou en d'autres termes, s'exerçant selon le degré de liberté Tx.

Le système 50 comprend deux vérins hydrauliques 62, 64, de préférence répartis symétriquement par rapport au plan vertical P de symétrie de l'ensemble moteur 100. Les vérins 62, 64 disposent respectivement d'un piston 66, 68 rapporté fixement sur le turbopropulseur 2, au niveau de la partie avant de celui-ci, et plus précisément au niveau de sa boîte de réduction 70, et présentent également un cylindre à coulissement 72, 74 logeant à coulissement le piston 66, 68, ce cylindre étant rapporté fixement sur le cadre avant 32.

Pour chacun des vérins 62, 64, le piston 66, 68 délimite une chambre avant et une chambre arrière, les deux chambres avant étant connectées hydrauliquement entre elles par l'intermédiaire d'une ligne hydraulique 76, et les deux chambres arrière étant connectées hydrauliquement entre elles par l'intermédiaire d'une autre ligne hydraulique 78.

L'orientation des pistons 66, 68 et leur direction de coulissement au sein du cylindre associé correspondent à la direction X, de sorte qu'ils sont chacun capable de transférer des efforts selon cette même direction.

Les deux efforts représentés sur la figure 2 correspondent donc aux efforts transmis par le système hydraulique 50 à la structure rigide 8, et sont dénommés F_Tx_62_X et F_Tx_64_X. D'une manière générale, l'ensemble des efforts indiqués dans la description et sur les figures sont dénommés de la façon suivante :
P_Dl_R_D
avec :
   - P prenant la valeur « F » si le vérin se trouve sur le cadre avant 32, et prenant la valeur « R » si le vérin se trouve sur le cadre arrière 29 ;
   - Dl correspondant au degré de liberté concerné ;
   - R correspondant à la référence numérique du vérin concerné ; et
   - D correspondant à la direction dans laquelle se produit l'effort.

Un dispositif d'amortissement hydraulique 80 équipe chaque ligne 76, 78, afin d'amortir les vibrations du turbopropulseur susceptibles en particulier d'être créées par l'hélice. Il comprend un réservoir 82 rempli de fluide et communiquant de part et d'autre avec la ligne hydraulique concernée, ainsi qu'une bille 84 en caoutchouc ou similaire introduite librement dans ce même réservoir, avant la fermeture de ce dernier.

Ainsi, en cas de vibrations du turbopropulseur 2, la compression de la bille 84 libre au sein du réservoir, provoquée par la mise en pression du fluide, a pour avantage d'engendrer une chute de cette pression, d'où il en résulte un véritable effet d'amortissement.

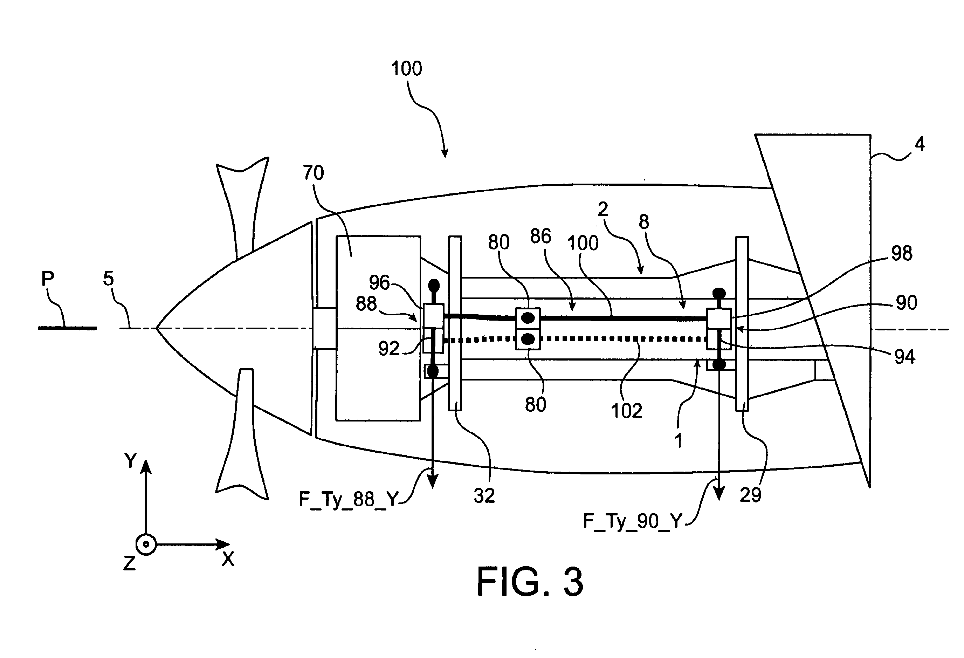

En référence à la figure 3, on peut voir schématiquement le système hydraulique 86 faisant partie intégrante des moyens de fixation et dédié au transfert, du turbopropulseur 2 vers la structure rigide 8, des efforts s'exerçant selon la direction Y, ou en d'autres termes, s'exerçant selon le degré de liberté Ty.

Le système 86 comprend deux vérins hydrauliques 88, 90, de préférence espacés longitudinalement l'un de l'autre. Les vérins 88, 90 disposent respectivement d'un piston 92, 94 rapporté fixement sur la structure rigide, respectivement au niveau du cadre 32 et du cadre 29, et présentent également un cylindre à coulissement 96, 98 logeant à coulissement le piston 92, 94, ce cylindre étant rapporté fixement sur le turbopropulseur, et plus précisément sur la boîte de réduction 70 pour ce qui concerne le cylindre 96.

Pour chacun des vérins 88, 90, le piston 92, 94 délimite une chambre droite et une chambre gauche, les deux chambres de droite étant connectées hydrauliquement entre elles par l'intermédiaire d'une ligne hydraulique 100, et les deux chambres de gauche étant connectées hydrauliquement entre elles par l'intermédiaire d'une autre ligne hydraulique 102.

L'orientation des pistons 92, 94 et leur direction de coulissement au sein du cylindre associé correspondent à la direction Y, de sorte qu'ils sont chacun capable de transférer des efforts selon cette même direction.

Les deux efforts représentés sur la figure 3 correspondent donc aux efforts transmis par le système hydraulique 86 à la structure rigide 8, et sont dénommés F_Ty_88_Y et R_Ty_90_Y.

Ici encore, un dispositif d'amortissement hydraulique 80 similaire à celui décrit ci-avant équipe chacune des lignes 100, 102, aux mêmes fins que celles indiquées ci-dessus.

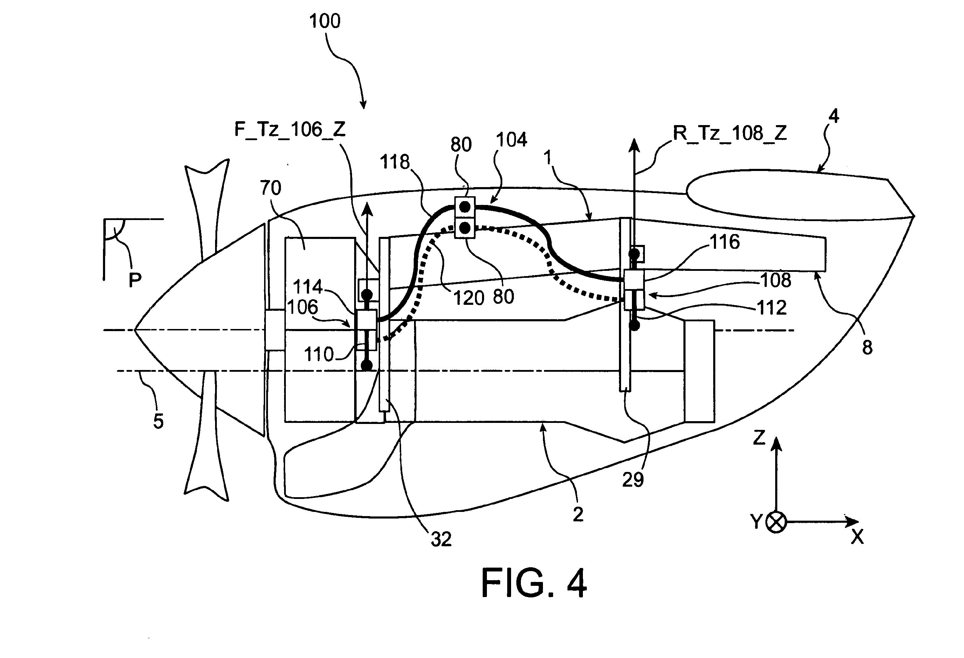

En référence à la figure 4, on peut voir schématiquement le système hydraulique 104 faisant partie intégrante des moyens de fixation et dédié au transfert, du turbopropulseur 2 vers la structure rigide 8, des efforts s'exerçant selon la direction Z, ou en d'autres termes, s'exerçant selon le degré de liberté Tz.

Le système 104 comprend deux vérins hydrauliques 106, 108, de préférence espacés longitudinalement l'un de l'autre. Les vérins 106, 108 disposent respectivement d'un piston 110, 112 rapporté fixement sur le turbopropulseur, et plus précisément sur la boîte de réduction 70 pour ce qui concerne le piston 110, et présentent également un cylindre à coulissement 114, 116 logeant à coulissement le piston 110, 112, ce cylindre étant rapporté fixement sur la structure rigide, et plus précisément respectivement sur le cadre avant 32 et le cadre arrière 29.

Pour chacun des vérins 106, 108, le piston 110, 112 délimite une chambre haute et une chambre basse, les deux chambres hautes étant connectées hydrauliquement entre elles par l'intermédiaire d'une ligne hydraulique 118, et les deux chambres basses étant connectées hydrauliquement entre elles par l'intermédiaire d'une autre ligne hydraulique 120.

L'orientation des pistons 110, 112 et leur direction de coulissement au sein du cylindre associé correspondent à la direction Z, de sorte qu'ils sont chacun capable de transférer des efforts selon cette même direction.

Les deux efforts représentés sur la figure 4 correspondent donc aux efforts transmis par le système hydraulique 104 à la structure rigide 8, et sont dénommés F_Tz_106_Z et R_Tz_108_Z.

Ici encore, un dispositif d'amortissement hydraulique 80 équipe chacune des lignes 118, 120, aux mêmes fins que celles indiquées ci-dessus.

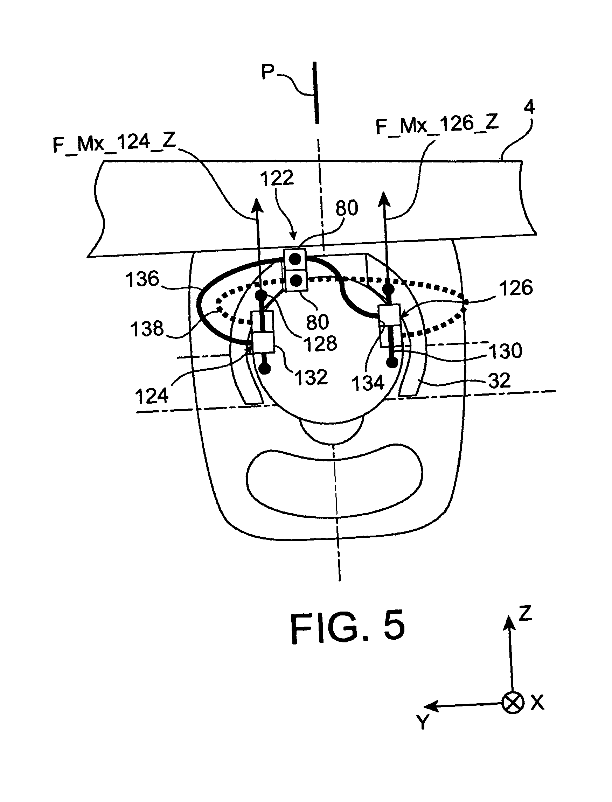

En référence à la figure 5, on peut voir schématiquement le système hydraulique 122 faisant partie intégrante des moyens de fixation précités et dédié au transfert, du turbopropulseur 2 vers la structure rigide 8, des efforts s'exerçant selon l'axe de rotation X, ou en d'autres termes, s'exerçant selon le degré de liberté Mx.

Le système 122 comprend deux vérins hydrauliques 124, 126, de préférence répartis symétriquement par rapport au plan vertical P. Les vérins 124, 126 disposent respectivement d'un piston 128, 130 rapporté fixement sur le cadre avant 32 pour l'un et sur le turboréacteur pour l'autre, et présentent également un cylindre à coulissement 132, 134 logeant à coulissement le piston 128, 130, ce cylindre étant rapporté fixement sur le turbopropulseur pour l'un, et plus précisément sur la boîte de réduction 70, et sur le cadre 32 pour l'autre.

Pour chacun des vérins 124, 126, le piston 128, 130 délimite une chambre haute et une chambre basse, ces chambres étant connectées hydrauliquement en opposition, par l'intermédiaire de deux lignes hydrauliques 136, 138. Comme visible sur la figure 5, la ligne 136 connecte la chambre haute du vérin 124 et la chambre basse du vérin 126, tandis que la ligne 138 connecte la chambre basse du vérin 124 et la chambre haute du vérin 126.

L'orientation des pistons 128, 130 et leur direction de coulissement au sein du cylindre associé correspondent à la direction Z, de sorte qu'ils sont chacun capable de transférer des efforts selon cette même direction.

Les deux efforts représentés sur la figure 5 correspondent donc aux efforts transmis par le système hydraulique 122 à la structure rigide 8, et sont dénommés F_Mx_124_Z et F_Mx_126_Z.

Les vérins 124, 126, produisant de tels efforts et interconnectés hydrauliquement de la manière exposée ci-dessus, s'opposent donc au couple Mx de manière passive, quelle que soit l'intensité et le sens de ce couple.

Ici aussi, un dispositif d'amortissement hydraulique 80 équipe chacune des lignes 136, 138, aux mêmes fins que celles indiquées ci-dessus.

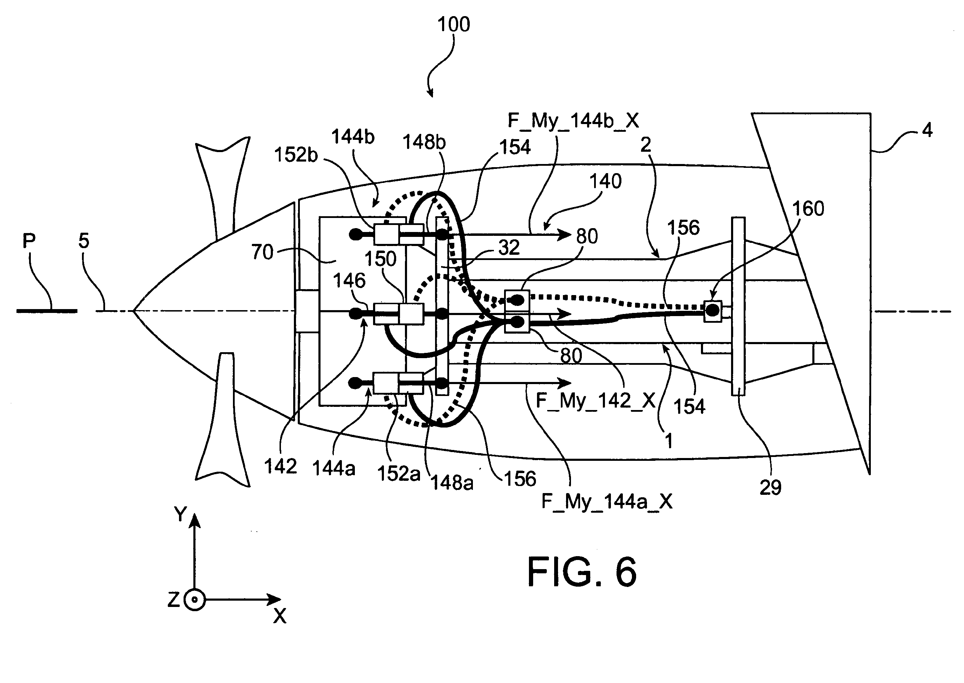

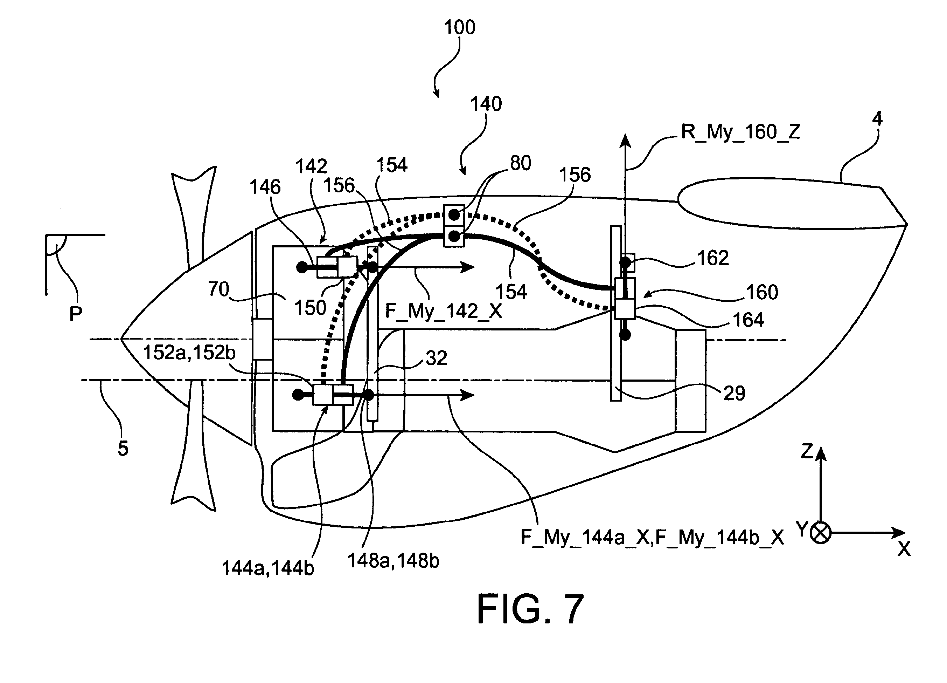

En référence aux figure 6 et 7, on peut voir schématiquement le système hydraulique 140 faisant partie intégrante des moyens de fixation précités et dédié au transfert, du turbopropulseur 2 vers la structure rigide 8, des efforts s'exerçant selon l'axe de rotation Y, ou en d'autres termes, s'exerçant selon le degré de liberté My.

En référence tout d'abord à la figure 6, le système 140 comprend trois vérins hydrauliques 142, 144a, 144b, ces deux derniers étant de préférence répartis symétriquement par rapport au plan vertical P, et le vérin 142 traversé par ce même plan. De plus, le vérin 142 est situé plus haut que les deux vérins symétriques 144a, 144b, comme le montre la figure 7.

Les vérins 144a, 144b disposent respectivement d'un piston 148a, 148b rapporté fixement sur le cadre avant 32, aux extrémités inférieures de celui-ci, et présentent également un cylindre à coulissement 152a, 152b logeant à coulissement le piston 148a, 148b, ce cylindre étant rapporté fixement sur le turbopropulseur, et plus précisément sur la boîte de réduction 70.

Par ailleurs, le vérin supérieur avant 142 dispose d'un piston 146 rapporté fixement sur le turbopropulseur, et plus précisément sur la boîte de réduction 70, et également d'un cylindre à coulissement 150 logeant à coulissement le piston 146, ce cylindre étant rapporté fixement sur le cadre avant 32, au niveau d'une extrémité supérieure de celui-ci.

Pour chacun des vérins 142, 144a, 144b, le piston 146, 148a, 148b délimite une chambre avant et une chambre arrière, les deux chambres avant des vérins 144a, 144b et la chambre arrière du vérin 142 étant connectées hydrauliquement entre elles par l'intermédiaire d'une ligne ou réseau hydraulique 154, et les deux chambres arrière des vérins 144a, 144b et la chambre avant du vérin 142 étant connectées hydrauliquement entre elles par l'intermédiaire d'une autre ligne ou réseau hydraulique 156.

L'orientation des pistons 146, 148a, 148b et leur direction de coulissement au sein du cylindre associé correspondent à la direction X, de sorte qu'ils sont chacun capable de transférer des efforts selon cette même direction.

Les trois efforts représentés sur la figure 6 correspondent donc aux efforts transmis par le système hydraulique 140 à la structure rigide 8, et sont dénommés F_My_142_X, F_My_144a_X, et F_My_144a_X.

Ici aussi, un dispositif d'amortissement hydraulique 80 équipe chacune des lignes 154, 156, aux mêmes fins que celles indiquées ci-dessus.

Sur la figure 7, on peut voir que le système 140 comprend en outre un vérin hydraulique arrière 160, disposant d'un piston 162 rapporté fixement sur le cadre arrière 29, et présentent également un cylindre à coulissement 164 logeant à coulissement le piston 162, ce cylindre étant rapporté fixement sur le turbopropulseur.

Le vérin 160 délimite une chambre haute et une chambre basse, la chambre haute étant raccordée à la ligne hydraulique 154, prenant ainsi la forme de quatre tronçons chacun issu du dispositif d'amortissement, et la chambre basse étant raccordée à la ligne hydraulique 156, prenant également la forme de quatre tronçons chacun issu du dispositif d'amortissement 80 prévu sur cette ligne.

L'orientation du piston 162 et sa direction de coulissement au sein du cylindre associé correspondent à la direction Z, de sorte qu'il est capable de transférer des efforts selon cette même direction.

L'effort représenté sur la figure 7 correspond donc à un autre effort transmis par le système hydraulique 140 à la structure rigide 8, et est dénommé R_My_160_Z.

Les vérins 142, 144a, 144b, 160 produisant de tels efforts et interconnectés hydrauliquement de la manière exposée ci-dessus, s'opposent donc au couple My de manière passive, quelle que soit l'intensité et le sens de ce couple.

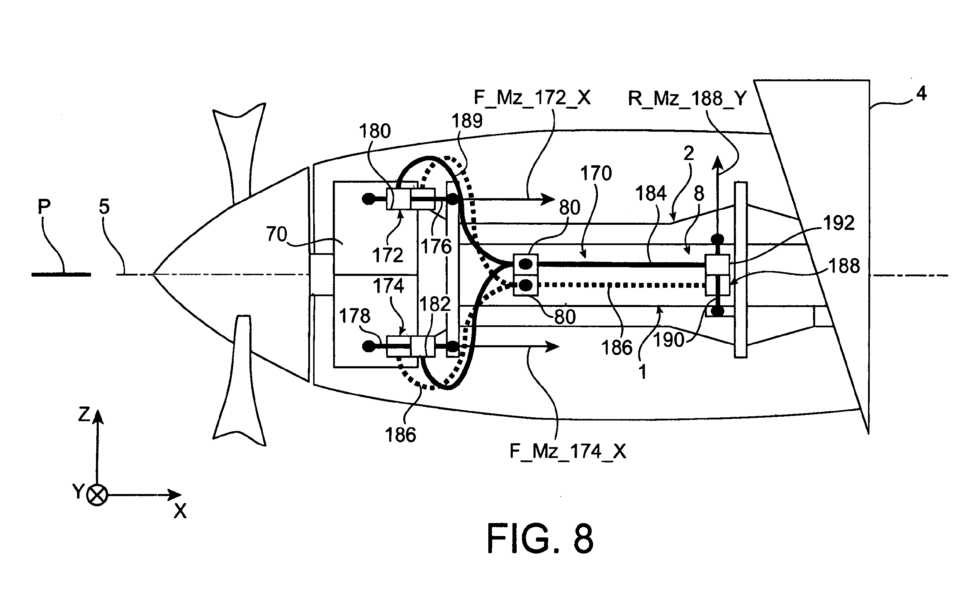

Enfin, en référence à la figure 8 on peut voir schématiquement le système hydraulique 170 faisant partie intégrante des moyens de fixation précités et dédié au transfert, du turbopropulseur 2 vers la structure rigide 8, des efforts s'exerçant selon l'axe de rotation Z, ou en d'autres termes, s'exerçant selon le degré de liberté Mz.

Le système 170 comprend tout d'abord deux vérins hydrauliques avant 172, 174 de préférence répartis symétriquement par rapport au plan vertical P de symétrie de l'ensemble moteur 100. Les vérins 172, 174 disposent respectivement d'un piston 176, 178 rapporté fixement sur le cadre avant 32 pour l'un et sur le turboréacteur pour l'autre, et présentent également un cylindre à coulissement 180, 182 logeant à coulissement le piston 176, 178, ce cylindre étant rapporté fixement sur le turbopropulseur 2 pour l'un, au niveau de sa boîte de réduction 70, et sur le cadre avant 32 pour l'autre.

Pour chacun des vérins 172, 174, le piston 176, 178 délimite une chambre avant et une chambre arrière, ces chambres étant connectées hydrauliquement en opposition, par l'intermédiaire de deux lignes hydrauliques 184, 186. Comme visible sur la figure 8, la ligne 184 connecte la chambre avant du vérin 172 et la chambre arrière du vérin 174, tandis que la ligne 186 connecte la chambre arrière du vérin 172 et la chambre avant du vérin 174.

L'orientation des pistons 172, 174 et leur direction de coulissement au sein du cylindre associé correspondent à la direction X, de sorte qu'ils sont chacun capable de transférer des efforts selon cette même direction.

Les deux efforts représentés sur la figure 8 correspondent donc aux efforts transmis par le système hydraulique 170 à la structure rigide 8, et sont dénommés F_Mz_172_X et F_Mz_174_X.

Ici aussi, un dispositif d'amortissement hydraulique 80 équipe chacune des lignes 184, 186, aux mêmes fins que celles indiquées ci-dessus.

On peut voir que le système 170 comprend en outre un vérin hydraulique arrière 188, disposant d'un piston 190 rapporté fixement sur le cadre arrière 29, et présentent également un cylindre à coulissement 192 logeant à coulissement le piston 190, ce cylindre étant rapporté fixement sur le turbopropulseur.

Le vérin 188 délimite une chambre droite et une chambre gauche, la chambre droite étant raccordée aux vérins 172, 174 par l'intermédiaire de la ligne hydraulique 184, prenant ainsi la forme de trois tronçons chacun issu du dispositif d'amortissement, et la chambre gauche étant raccordée aux vérins 172, 174 par l'intermédiaire de la ligne hydraulique 186, prenant aussi la forme de trois tronçons chacun issu du dispositif d'amortissement.

L'orientation du piston 190 et sa direction de coulissement au sein du cylindre associé correspondent à la direction Y, de sorte qu'il est capable de transférer des efforts selon cette même direction.

L'effort représenté sur la figure 8 correspond donc à un autre effort transmis par le système hydraulique 170 à la structure rigide 8, et est dénommé R_Mz_188_Y.

Les vérins 172, 174, 188 produisant de tels efforts et interconnectés hydrauliquement de la manière exposée ci-dessus, s'opposent donc au couple Mz de manière passive, quelle que soit l'intensité et le sens de ce couple.

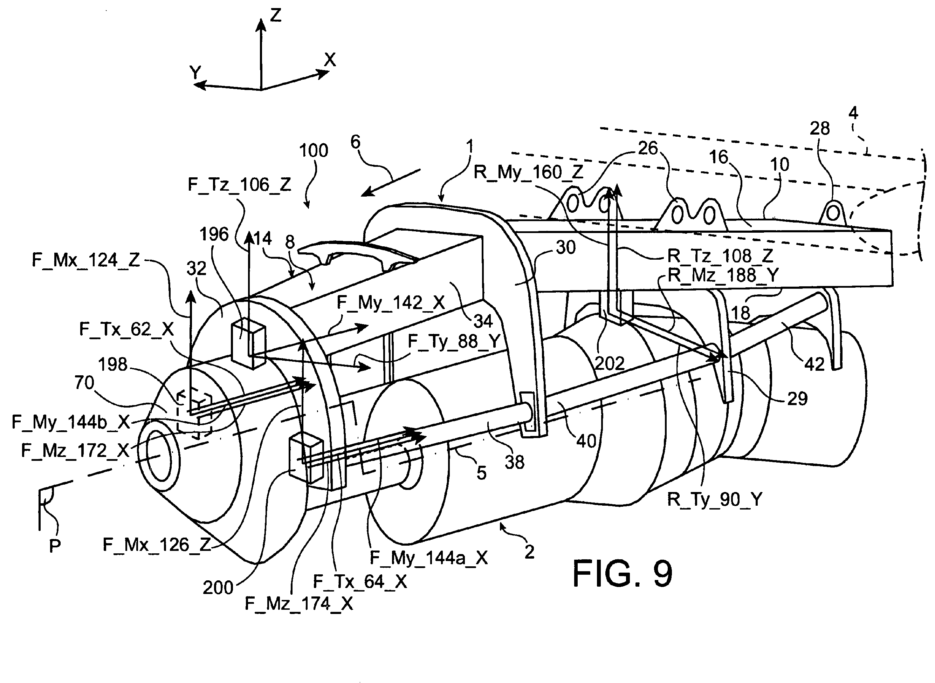

Sur la figure 9 sont reproduits schématiquement l'ensemble des efforts exercés par les vérins hydrauliques des moyens de fixation du turbopropulseur, ces efforts pouvant être, comme montré sur cette figure, concentrés en trois points 196, 198, 200 sur le cadre avant 32, et en un point 202 sur le cadre arrière 29 de la structure rigide, les points 196 et 202 étant de préférence traversés par le plan P, et les points 198, 200 disposés symétriquement par rapport à ce même plan. Naturellement, comme cela ressort de ce qui précède, aucun autre élément que les systèmes hydrauliques n'est employé pour assurer l'accrochage du turbopropulseur sur la structure rigide.

Comme mentionné ci-dessus, les vérins hydrauliques sont dimensionnés de manière à obtenir la répartition des efforts désirée entre le cadre avant 32 et le cadre arrière 29, par exemple 80% des efforts passant par le cadre avant, et 20% par le cadre arrière.

## Revendications

1. Ensemble moteur (100) pour aéronef comprenant un turbopropulseur (2) ainsi qu'un dispositif d'accrochage (1) dudit turbopropulseur (2) sur une voilure (4) de l'aéronef, ledit dispositif d'accrochage comportant une structure rigide (8) ainsi que des moyens de fixation dudit turbopropulseur (2) sur ladite structure rigide,
**caractérisé en ce que** lesdits moyens de fixation comprennent six systèmes hydrauliques (50, 86, 104, 122, 140, 170) indépendants les uns des autres, chacun exclusivement dédié au transfert, vers ladite structure rigide (8), des efforts s'exerçant respectivement selon l'un des six degrés de liberté de mouvement (Tx, Ty, Tz, Mx, My, Mz) associés audit turbopropulseur, chaque système hydraulique comprenant au moins un vérin hydraulique présentant un piston rapporté sur l'un des deux éléments parmi le turbopropulseur et la structure rigide du dispositif d'accrochage, ainsi qu'un cylindre logeant ledit piston et rapporté sur l'autre de ces deux mêmes éléments.

2. Ensemble moteur (100) selon la revendication 1, **caractérisé en ce qu'**au moins l'un desdits six systèmes hydrauliques (50, 86, 104, 122, 140, 170) comprend au moins deux vérins connectés hydrauliquement et présentant chacun un piston rapporté sur l'un des éléments parmi le turbopropulseur et la structure rigide du dispositif d'accrochage, ainsi qu'un cylindre logeant ledit piston et rapporté sur l'autre de ces mêmes éléments.

3. Ensemble moteur (100) selon la revendication 1 ou la revendication 2, **caractérisé en ce qu'**au moins l'un desdits six systèmes hydrauliques (50, 86, 104, 122, 140, 170) comprend un dispositif d'amortissement (80).

4. Ensemble moteur (100) selon la revendication 3, **caractérisé en ce** ledit dispositif d'amortissement (80) comprend un réservoir de fluide (82) au sein duquel est logé un corps (84) susceptible d'être comprimé par la pression du fluide.

5. Ensemble moteur (100) selon la revendication 4, **caractérisé en ce que** ledit corps (84) est réalisé en caoutchouc.

6. Ensemble moteur (100) selon la revendication 4 ou la revendication 5, **caractérisé en ce que** ledit corps (84) est dépourvu de liaison mécanique rigide avec ledit réservoir de fluide (82).

7. Ensemble moteur (100) selon la revendication 1 ou la revendication 6, **caractérisé en ce que** ledit corps (84) est une bille insérée dans ledit réservoir de fluide (82).

8. Ensemble moteur (100) selon l'une quelconque des revendications précédentes, **caractérisé en ce que** ladite structure rigide (8) comprend des cadres transversaux, et **en ce que** chacun desdits vérins hydrauliques est raccordé sur l'un desdits cadres transversaux.

9. Ensemble moteur (100) selon la revendication 8, **caractérisé en ce que** seuls deux cadres transversaux (29, 32) portent lesdits vérins hydrauliques.

10. Aéronef comprenant au moins un ensemble moteur (100) selon l'une quelconque des revendications précédentes.

## Claims

1. An engine unit (100) for an aircraft comprising a turboprop engine (2) together with a device for mounting (1) the said turboprop engine (2) on a wing surface (4) of the aircraft, where the said mounting device comprises a rigid structure (8) and means for fastening the said turboprop engine (2) on to the said rigid structure.
**characterised in that** the said fasteners comprise six mutually independent hydraulic systems (50, 86, 104, 122, 140, 170), each one exclusively dedicated to the transfer, to the said rigid structure (8), of the efforts exerted respectively according to one of the six degrees of freedom of mouvement (Tx, Ty, Tz, Mx, My, Mz) associated with the said turboprop engine, where each hydraulic system comprises at least one hydraulic jack with a piston attached to one of the two elements i.e. either the turboprop engine or the rigid structure of the mounting device, together with a cylinder housing the said piston and attached to the other of these same two elements.

2. An engine unit (100) according to claim 1, **characterised in that** at least one of the said six hydraulic systems (50, 86, 104, 122, 140, 170) comprises at least two jacks connected hydraulically and each having a piston attached to one of the elements i.e. either the turboprop engine or the rigid structure of the mounting device, together with a cylinder housing the said piston and attached to the other of these same elements.

3. An engine unit (100) according to claim 1 or claim 2, **characterised in that** at least one of the said six hydraulic systems (50, 86, 104, 122, 140, 170) comprises a dampening device (80).

4. An engine unit (100) according to claim 3, **characterised in that** the said dampening device (80) comprises a fluid tank (82) in which is housed a body (84) able to be compressed by the pressure of the fluid.

5. An engine unit (100) according to claim 4, **characterised in that** the said body (84) is made of rubber.

6. An engine unit (100) according to claim 4 or claim 5, **characterised in that** the said body (84) has no rigid mechanical link with the said fluid tank (82).

7. An engine unit (100) according to claim 1 or claim 6, **characterised in that** the said body (84) is a ball inserted in the said fluid tank (82).

8. An engine unit (100) according to any of the previous claims, **characterised in that** the said rigid structure (8) comprises transverse frames, and **in that** each of the said hydraulic jacks is connected to one of the said transverse frames.

9. An engine unit (100) according to claim 8, **characterised in that** only two transverse frames (29, 32) bear the said hydraulic jacks.

10. An aircraft comprising at least one engine unit (100) according to any of the previous claims.

## Patentansprüche

1. Triebwerkanordnung (100) für ein Luftfahrzeug, die ein Propeller-Turbotriebwerk (2) sowie eine Befestigungsvorrichtung (1) des Propeller-Turbotriebwerks (2) an einer Tragfläche (4) des Luftfahrzeugs umfasst, wobei die Befestigungsvorrichtung eine starre Struktur (8) sowie Mittel zur Befestigung des Propeller-Turbotriebwerks (2) an der starren Struktur aufweist,
**dadurch gekennzeichnet, dass** die Mittel zur Befestigung sechs voneinander unabhängige hydraulische Systeme (50, 86, 104, 122, 140, 170) umfassen, die jeweils ausschließlich zur Übertragung von Kräften, die jeweils entsprechend einem der sechs Bewegungsfreiheitsgrade (Tx, Ty, Tz, Mx, My, Mz) in Verbindung mit dem Propeller-Turbotriebwerk auftreten, auf die starre Struktur (8) dienen, wobei jedes hydraulische System mindestens einen Hydraulik-Arbeitszylinder umfasst, der einen Kolben, der an einem von den zwei Elementen Propeller-Turbotriebwerk und starre Struktur der Befestigungsvorrichtung angesetzt ist, sowie einen Zylinder, der den Kolben aufnimmt und an dem anderen dieser zwei Elemente angesetzt ist, aufweist.

2. Triebwerkanordnung (100) nach Anspruch 1, **dadurch gekennzeichnet, dass** mindestens eines der sechs hydraulischen Systeme (50, 86, 104, 122, 140, 170) mindestens zwei Arbeitszylinder umfasst, die hydraulisch verbunden sind und jeweils einen Kolben, der an einem der Elemente, Propeller-Turbotriebwerk oder starre Struktur der Befestigungsvorrichtung, angesetzt ist, sowie einen Zylinder, der den Kolben aufnimmt und an dem anderen dieser Elemente angesetzt ist, aufweist.

3. Triebwerkanordnung (100) nach Anspruch oder Anspruch 2, **dadurch gekennzeichnet, dass** mindestens eines der sechs hydraulischen Systeme (50, 86, 104, 122, 140, 170) eine Dämpfungsvorrichtung (80) umfasst.

4. Triebwerkanordnung (100) nach Anspruch 3, **dadurch gekennzeichnet, dass** die Dämpfungsvorrichtung (80) einen Fluidbehälter (82) umfasst, in dessen Innerem sich ein Körper (84) befindet, der durch den Fluiddruck komprimiert werden kann.

5. Triebwerkanordnung (100) nach Anspruch 4, **dadurch gekennzeichnet, dass** der Körper (84) in Kautschuk ausgeführt ist.

6. Triebwerkanordnung (100) nach Anspruch 4 oder Anspruch 5, **dadurch gekennzeichnet, dass** der Körper (84) ohne eine starre mechanische Verbindung mit dem Fluidbehälter (82) ist.

7. Triebwerkanordnung (100) nach Anspruch 1 oder Anspruch 6, **dadurch gekennzeichnet, dass** der Körper (84) eine Kugel bzw. ein Block ist, die bzw. der in den Fluidbehälter (82) eingebracht ist.

8. Triebwerkanordnung (100) nach einem der vorhergehenden Ansprüche, **dadurch gekennzeichnet, dass** die starre Struktur (8) Querrahmen umfasst und dass jeder der Hydraulik-Arbeitszylinder an einem der Querrahmen befestigt ist.

9. Triebwerkanordnung (100) nach Anspruch 8, **dadurch gekennzeichnet, dass** nur zwei Querrahmen (29, 32) die Hydraulik-Arbeitszylinder tragen.

10. Luftfahrzeug, das mindestens eine Triebwerkanordnung (100) nach einem der vorhergehenden Anspruche umfasst.
